# EUROPEAN PATENT APPLICATION

(11) **EP 2 107 730 A1**
(43) Date of publication of application: **07.10.2009**
(21) Application number: 08006220.1
(22) Date of filing: 31.03.2008
(51) Int. Cl.: H04L 12/56

(54) **Method for determining to which resource among plural resources, elements of a group of elements have to be allocated**

(71) Applicant: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: Voyer, Nicolas, CS 10806 35708 Rennes Cedex 7 (FR)
(74) Representative: Maillet, Alain

(57) **Abstract**

The present invention concerns a method for determining to which resource among plural resources, elements of a group of elements have to be allocated, each resource having a capacity to process elements of the group of elements within a time duration. The method:
- allocates an element of the group of elements to the resource which has the highest capacity to process elements of the group of elements within the time duration,
- determines a revised capacity for each resource according to the capacity of the resource and elements allocated to the resource,
- allocates next element of the group of elements to the resource which has the highest revised capacity to process elements of the group of elements.

## Description

The present invention relates generally to a method and a device for determining to which resource among plural resources, elements of a group of elements have to be allocated.

One classical way of allocating elements of a group of elements to plural resources is to distribute elements in a round-robin fashion.

Round-robin is a scheduling algorithm which assigns elements to resources in equal portions and in order, handling all resources without priority.

The present invention aims at providing a more efficient allocation method than round-robin.

To that end, the present invention concerns a method for determining to which resource among plural resources, elements of a group of elements have to be allocated, each resource having a capacity to process elements of the group of elements within a time duration, **characterized in that** the method comprises the steps of:
- allocating an element of the group of elements to the resource which has the highest capacity to process elements of the group of elements within the time duration,
- determining a revised capacity for each resource according to the capacity of the resource and elements allocated to the resource,
- allocating next element of the group of elements to the resource which has the highest revised capacity to process elements of the group of elements.

The present invention concerns also a device for determining to which resource among plural resources, elements of a group of elements have to be allocated, each resource having a capacity to process elements of the group of elements within a time duration, **characterized in that** the device comprises:
- means for allocating an element of the group of elements to the resource which has the highest capacity to process elements of the group of elements within the time duration,
- means for determining a revised capacity for each resource according to the capacity of the resource and elements allocated to the resource,
- means for allocating next element of the group of elements to the resource which has the highest revised capacity to process elements of the group of elements.

Thus, each element of the group of element can be assigned to one resource, even though the number of a group of elements is higher than the capacity of each one resource. The overall number of elements that can be allocated is increased.

Furthermore, the revised capacity of each resource is maximised, load of elements can be efficiently spread over multiple resources. As each resource has a revised capacity, it is possible to assign resources to a high number of elements in the group of elements.

As example, if resources are radio channels controlled by different base stations which communicate with other mobile terminals, the mobile terminals being unequally distributed, among the base stations, a mobile terminal can yet communicate through multiple base stations and can get a good throughput with these base stations, as the load yielded by the other mobile terminals is spread over the base stations.

Moreover, if the resources which can potentially be allocated to elements of a given group of elements is subject to modification, e.g. due to the discovery of new resource or due to the disappearing of existing resource, all elements of the group of elements can yet effectively be allocated to available resources.

As example, if resources are radio channels controlled by different base stations, which communicate with the mobile terminal, all data packets of a given data flow can still be allocated to radio channels even though the mobile terminal can no longer receive signals from a given base station, due to vanishing radio conditions. Ideally, it can be allocated to new radio channels being setup between the mobile terminal and a base station to which the mobile is moving to, and/or which quality is getting higher.

According to a particular feature, the determination of the revised capacity for each resource and the allocation of the next element of the group of elements to the resource which has the highest revised capacity to process elements of the group of elements are iteratively executed as far as the time duration is not expired or are executed as far as each revised capacity is below a given value.

Thus, the full capacity of all resources can be effectively assigned during the time duration. Moreover, resource can not be assigned to any element beyond its possibilities of treatment.

Thus, if resources are batteries, the number of occurrences where the battery will be fully discharged will be reduced. As a consequence, the lifetime of battery is extended, as the battery efficiency decreases with the number of full discharge cycles.

According to a particular feature, the group of elements is a flow of data and the elements are packets of data.

Thus, packets of data of a given flow of data can be processed by different resources, beyond the limitation of each individual resource. The capacity of treatment of data packets of the data flow is increased.

According to a particular feature, the method is executed by a first telecommunication device and the flow of data is being delivered to a second telecommunication device directly or via at least one third telecommunication device.

Thus, the data throughput of the flow of data exchanged between the first and second telecommunication devices can be increased.

According to a particular feature, the first and the at least one third telecommunication device are first and second base stations and the second telecommunication device is a mobile terminal.

Thus, the data throughput of the flow of data sent by the first base station to the mobile terminal can be increased.

According to a particular feature, the resources are radio channels established between the first base station and the mobile terminal or network channels which are established between the first base station and the second base stations.

Thus, the first base station can send the flow of data to the mobile terminal with a throughput extending the capacity of the radio channels that the first base station has established with the mobile terminal, using the extra capacity provided by the network channels.

Thus, it is possible to balance the processing load among the first and second base stations. It is no longer necessary to over-dimension the resource of the base station to support strong unbalanced traffics in the network. As a result, the size and consumption in terms of power, processing and memory are reduced.

According to a particular feature, the capacity of each radio channel established between the first base station and the mobile terminal is representative of the maximum throughput of data that can be transferred by the first base station via the radio channel to the mobile terminal.

Thus, the capacity of the radio interface of the first base station can be saved to send data to other mobile terminals served by the first base station. Thanks to the present invention, it is easy to achieve load balancing of radio interfaces of neighbor base stations.

According to a particular feature, for each second base station, a radio channel is established between the second base station and the mobile terminal, and the capacity of each network channel established between the first base station and each second base station is representative of the maximum throughput of data that can be transferred to the mobile terminal by the second base station via the radio channel established between the second base station and the mobile terminal.

Thus, the capacity of the downlink radio interface of each second base station can be saved to send data to other mobile terminals served by the second base station. It is easy to achieve load balancing of downlink radio interface of neighbor base stations.

According to a particular feature, the capacity of each network channel established between the first base station and each second base station is representative of the maximum throughput of data that can be transferred to each second base station by the first base station via the network channel established between the first base station and each second base station

Thus, the capacity of the network interface between the first base station and each second base station can be saved to send data to other mobile terminals served by the first base station or by the second base station. It is easy to achieve load balancing of network interfaces between the first and each second base station.

According to a particular feature, the first telecommunication device is a mobile terminal and the second and at least one third telecommunication device are first and second base stations.

Thus, the data throughput of the flow of data sent by the mobile terminal to the first base station can be increased.

According to a particular feature, the resources are radio channels established between the mobile terminal and the first base station or radio channels established between the mobile terminal and the second base stations.

Thus, the mobile terminal can send the flow of data to the first base station with a throughput extending the capacity of the radio channels it has established with the first base station, using the extra capacity provided by the radio channels it has established with the second base stations.

According to a particular feature, the capacity of each radio channel established between the mobile terminal and a base station is representative of the maximum throughput of data that can be transferred by the mobile terminal to the first base station via the radio channel established between the mobile terminal and the base station.

Thus, the capacity of the uplink radio interface of first and each second base station can be saved to receive data from other mobile terminals served by first or second base stations. It is easy to achieve load balancing of uplink radio interface of neighbor base stations.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1a represents the architecture of a system in which the present invention is implemented;
Fig. 1b is a diagram representing the architecture of a wireless cellular telecommunication network in which the present invention is implemented;
Fig. 2 is a diagram representing the architecture of a base station of the wireless cellular telecommunication network in which the present invention is implemented ;
Fig. 3 is a diagram representing the architecture of a mobile terminal of the wireless cellular telecommunication network in which the present invention is implemented ;
Fig. 4 is a diagram representing modules comprised in the base station of the wireless cellular telecommunication network in which the present invention is implemented ;
Fig. 5 is a diagram representing modules comprised in the wireless interface of a mobile terminal of the wireless cellular telecommunication network in which the present invention is implemented ;
Fig. 6 is a first example of an algorithm executed according to the present invention;
Fig. 7 represents an example of capacities of resources to process elements of the group of elements and revised capacities of resources.

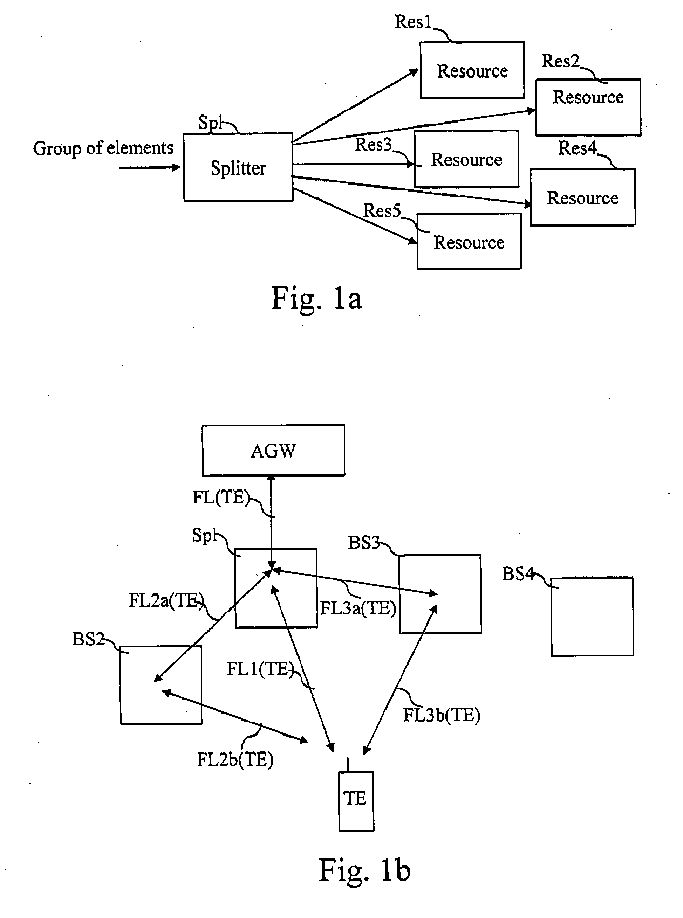

Fig. 1a represents the architecture of a system in which the present invention is implemented.

In the Fig. 1a, a splitter SPL splits a group of elements into splits which may be allocated to plural resources noted Res1 to Res5.

The group of elements may be as example a task divided into consecutive processing steps to be performed by processors Res1 to Res5 or a data segment, divided in consecutive data units, to be stored over the memory resources Res1 to Res5, or a request to batteries Res1 to Res5 to provide a bit of energy to an electrical device or a flow of consecutive data packets to be processed by the resources Res1 to Res 5. The process of a data packet by one resource may be as example the encoding of the data packet into a given format or the transfer of the data packet to a remote telecommunication device not shown in the Fig. 1a.

According to the invention, the splitter Spl determines to which resource among plural resources Res1 to Res5, elements of the group of elements have to be allocated.

Each resource Res1 to Res5 has a capacity to process elements of the group of elements within a time duration. The capacity of a given resource might vary in time, e.g. if the usage of the resource can be assigned to a number of multiple groups of elements, and/or if this number varies over time.

The splitter Spl allocates an element of the group of elements to the resource which has the highest capacity to process elements of any group of elements within the time duration, determines a revised capacity for each resource according to the capacity of the resource and elements allocated to the resource and allocates next element of the group of elements to the resource which has the highest revised capacity to process elements of the group of elements.

More precisely, the splitter Spl determines the revised capacity for each resource and allocates next element of the group of elements to the resource which has the highest revised capacity to process elements of the group of elements iteratively as far as the time duration is not expired or as far as each revised capacity is below a given value.

The predetermined value is as example the size or the minimum size of an element.

In the Fig. 1a, only five resources Res are shown, but we can understand that a more or less important number of resources RES are used in the present invention.

**Fig. 1b** is a diagram representing the architecture of a wireless cellular telecommunication network in which the present invention is implemented.

The Fig. 1b discloses an example of a wireless cellular telecommunication network wherein the present invention is implemented.

In the example of the Fig. 1b, the group of elements is a flow of data and the elements are packets of data. The resources are third telecommunication devices like base stations BS1 to BS2, and the splitter Spl is a first telecommunication device and the flow of data is delivered to a second telecommunication device.

According to a first mode of realization, the first and the third telecommunication devices are first and second base stations and the second telecommunication device is a mobile terminal.

According to a second mode of realization, the first telecommunication device is a mobile terminal and the second and the at least one third telecommunication device are first and second base stations.

In the Fig. 1b, a server AGW is connected to a plurality of base stations BS1 to BS4 through a telecommunication network. The telecommunication network is a dedicated wired network or a public network like a public switched network or an IP based network or a wireless network or an Asynchronous Transfer Mode network or a combination of above cited networks.

The telecommunication network enables the base stations BS1 to BS4 to be connected together if needed and enables the transfer between the base stations BS of at least a split of a flow of data intended to be transferred to a mobile terminal TE and/or enables the transfer between the base stations BS of at least a split of a flow of data transferred by a mobile terminal TE.

In the Fig. 1, only one server AGW is shown, but we can understand that a more important number of servers AGW can be used in the present invention.

On a similar way, only four base stations BS1 to BS4 are shown, but we can understand that a more important number of base stations BS are used in the present invention.

In Long Term Evolution (LTE) network currently under discussion in 3GPP, the server AGW is named an Access Gateway, and contains at least one Mobility Management Entity (MME) and one User Plane Entity (UPE). In General Packet Radio Service network, the server AGW is named a Serving GPRS Support Node (SGSN). In mobile IP network, the server AGW is named a Foreign Agent (FA) and in GSM network, the server AGW contains a Visitor Location Register (VLR) and a Mobile Switching Centre (MSC).

Each base station BS1 to BS4 manages at least one cell not shown in the Fig. 1. A cell of a base station BS is the area in which the power strength of the signals transferred by the base station BS are received by a mobile terminal TE located in the cell at a level which is upper than a predetermined value.

In the Fig. 1, only one mobile terminal TE is shown, but we can understand that a more important number of mobile terminals TE are in the wireless cellular telecommunication network.

A base station BS handles a mobile terminal TE when the base station BS receives from the server AGW a flow of data to be transferred to the mobile terminal and/or transfers to the server AGW a flow of data transferred by the mobile terminal TE.

When a flow of data has to be transferred to the mobile terminal TE, the flow of data is transferred from the server AGW to the base station BS which handles the mobile terminal TE. When a flow of data is transferred by the mobile terminal TE, the flow of data is transferred from the base station BS which handles the mobile terminal TE to the server AGW. That flow of data is shown by the arrow noted FL(TE).

The base station BS, which handles the mobile terminal TE, splits the flow of data to be transferred to the mobile terminal TE in at least two parts. A first split is directly transferred by the base station BS which handles the mobile terminal TE to the mobile terminal TE through its wireless interface and at least a second split is transferred by the base station BS which handles the mobile terminal TE to the mobile terminal TE through its network interface and at least a via base station BS.

According to the invention, the base station BS which handles the mobile terminal TE determines if a packet of data has to be transferred to the mobile terminal TE directly by the base station BS which handles the mobile terminal TE through its wireless interface or if the packet has to be transferred to the mobile terminal TE by the base station BS which handles the mobile terminal TE through its network interface and at least a via base station BS For that, the base station BS which handles the mobile terminal TE obtains, for each via base station BS and for its wireless interface, the capacity to process packets of data of the flow of data within a time duration.

The capacity to process packets of data of the flow of data within a time duration is as example the maximum throughput of data that can be transferred by a base station BS to the mobile terminal TE.

The base station BS which handles the mobile terminal TE allocates a packet of data to the base station BS which has the highest capacity to process packets of data within the time duration, determines a revised capacity for each base station BS according to the capacity of the base station BS and packets of data allocated to the base station BS and allocates next packet of data of the flow of data to the base station BS which has the highest revised capacity to process packets of data.

The mobile terminal TE receives the at least two splits and reconstructs the flow of data.

The mobile terminal TE splits the flow of data to be transferred to the base station BS which handles it in at least two parts.

According to the invention, the mobile terminal TE determines if a packet of data has to be directly transferred to the base station BS which handles the mobile terminal TE or if the packet has to be transferred to the base station BS which handles the mobile terminal TE through at least one via base station BS.

For that, the mobile terminal TE obtains, the capacity to process packets of data of the flow of data within a time duration over each radio channel established between itself and a base station BS.

As example, the capacity to process packets of data over a given radio channel established between the mobile terminal TE and a base station BS within the time duration is provided to the mobile terminal TE by the base station BS.

As other example, before being processed by a given radio channel established between the mobile terminal TE and a base station BS, data packets of the flow of data are stored in a FIFO (First Input First Output), and the capacity to process packets of data over the radio channel established between the mobile terminal TE and the base station BS within the time duration is determined upon observation of evolution of FIFO contents (e.g. size).

The mobile terminal TE allocates a packet of data to the radio channel established between itself and the base station BS which has the highest capacity to process packet of data within the time duration, determines a revised capacity for each radio channel according to the capacities and allocated packets of data and allocates next packet of data of the flow of data to the radio channel established between itself and the base station BS which has the highest revised capacity to process packets of data.

The base station BS which handles the mobile terminal TE receives at least two splits of a flow of data transferred by the mobile terminal TE. A first split is received from the mobile terminal TE directly by the base station BS which handles the mobile terminal TE through its wireless interface and at least a second split is received from the mobile terminal TE by the base station BS which handles the mobile terminal TE through at least a via base station BS. The base station BS which handles the mobile terminal TE reconstructs the flow of data.

The Fig. 1b discloses an example in which the base station BS1 handles the mobile terminal TE1.

The base station BS1 receives a flow of data represented by the arrow FL(TE) to be transferred to the mobile terminal TE. The base station BS1 splits the flow of data FL(TE) to be transferred to the mobile terminal TE in three splits, A first split represented by the arrow FL1(TE) is directly transferred by the base station BS1 to the mobile terminal TE through the wireless interface of the base station BS1. A second split represented by the arrow FL2a(TE) is transferred by the base station BS1 to the base station BS2 which transfers, through its wireless interface, the split represented by the arrow FL2b(TE) to the mobile terminal TE. A third split represented by the arrow FL3a(TE) is transferred by the base station BS1 to the base station BS3 which transfers, through its wireless interface, the split represented by the arrow FL3b(TE) to the mobile terminal TE.

The mobile terminal TE receives the three splits and reconstructs the flow of data.

The mobile terminal TE splits the flow of data to be transferred to the base station BS1 in a first part represented by the arrow FL1(TE), a second part represented by the arrow FL2b(TE) and a third part represented by the arrow FL3b(TE).

The base station BS2 transfers the received split to the base station BS1 as represented by the arrow FL2a(TE).

The base station BS3 transfers the received split to the base station BS1 as represented by the arrow FL3a(TE).

The base station BS1 which handles the mobile terminal TE receives the three splits of the flow of data transferred by the mobile terminal TE. The base station BS1 reconstructs the flow of data and transfers it to the Access Gateway AGW, as represented by the arrow FL(TE).

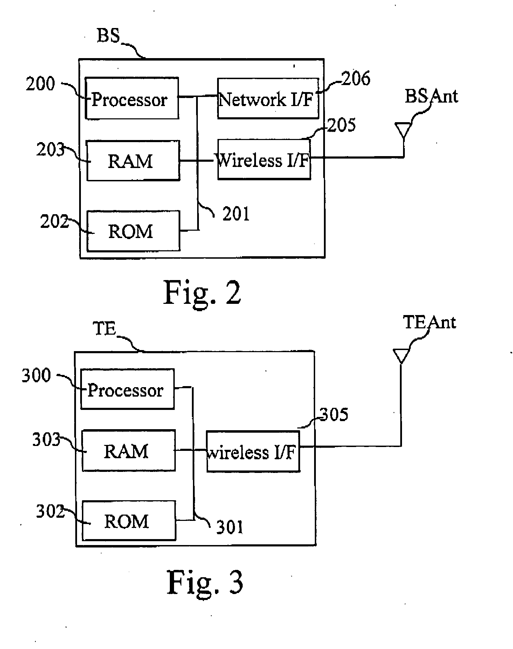

**Fig. 2** is a diagram representing the architecture of a base station of the wireless cellular telecommunication network in which the present invention is implemented.

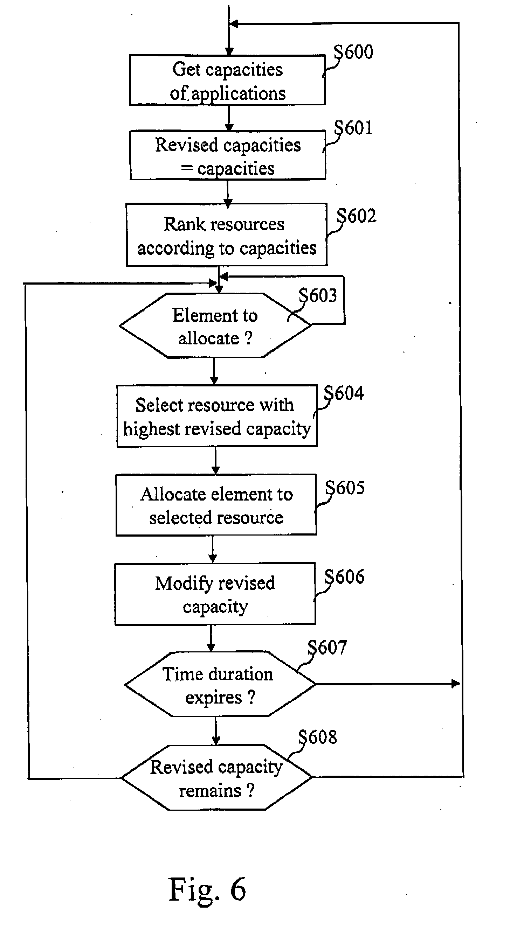

Each base station BS has, for example, an architecture based on components connected together by a bus 201 and a processor 200 controlled by the program as disclosed in the Fig. 6.

The bus 201 links the processor 200 to a read only memory ROM 202, a random access memory RAM 203, a network interface 206 and a wireless interface 205.

The memory 203 contains registers intended to receive variables, information identifying cells like cells which are known as neighbour of the cell or cells of the base station BS, the identifiers of the base stations BS which manage neighbour cells, connection, security information for each communication link with base stations BS which manage neighbour cells and the instructions of the program related to the algorithms as disclosed in the Fig. 6.

The processor 200 controls the operation of the network interface 206 and the wireless interface 205.

The read only memory 202 contains instructions of the programs related to the algorithm as disclosed in the Fig. 6, which is transferred, when the base station BS is powered on to the random access memory 203.

The base station BS is connected to the telecommunication network through the network interface 206. As example, the network interface 206 is a DSL (Digital Subscriber Line) modem, or an ISDN (Integrated Services Digital Network) interface, etc.

Through such interface, the base station BS exchanges information with the Access Gateway AGW and the other base stations BS of the wireless cellular telecommunication network.

Through the wireless interface 205, the base station BS transfers monitoring lists of information identifying cells and receives, from the mobile terminal TE, measurement reports.

The wireless interface 205 is connected to one antenna BSant, that is used to collect and radiate radiowaves from/to the mobile terminal TE.

In the Fig. 2, only one antenna BSant is shown, but we can understand that a more important number of antennas BSant may be used in the present invention.

The wireless interface 205 may comprise means for a simultaneous transmission of at least two signals to be transferred to one or plural mobile terminals using as example Multiple Input Multiple Output (MIMO) or transmit beamforming techniques or using plural transmission modules working as example in different frequency bands.

The wireless interface 205 may comprise means for a simultaneous reception of at least two signals transferred by one or plural mobile terminals using as example MIMO or using beamforming techniques or using plural reception modules working as example in different frequency bands.

**Fig. 3** is a diagram representing the architecture of a mobile terminal of the wireless cellular telecommunication network in which the present invention is implemented.

Each mobile terminal TE has, for example, an architecture based on components connected together by a bus 301 and a processor 300 controlled by the program as disclosed in Fig. 6.

The bus 301 links the processor 300 to a read only memory ROM 302, a random access memory RAM 303 and a wireless interface 305.

The memory 303 contains registers intended to receive variables and the instructions of the program related to the algorithm as disclosed in Fig. 6.

The read only memory 302 contains instructions of the program related to the algorithm as disclosed in Fig. 6, which are transferred, when the mobile terminal TE is powered on to the random access memory 303.

The wireless interface 305 comprises means for detecting, measuring and receiving signals transferred by base stations BS through the downlink channel, and for transmitting measurement reports through the uplink channel of the wireless cellular communication system.

The wireless interface 305 is connected to one antenna TEAnt, that is used to collect and radiate radio waves from/to the base stations BS.

In the Fig. 3, only one antenna TEAnt is shown, but we can understand that a more important number of antenna TEAnt may be used in the present invention.

The wireless interface 305 comprises means for simultaneous transmission of at least two signals to be transferred to different base stations using as example MIMO or using beamforming techniques or using plural transmission modules working as example in different frequency bands.

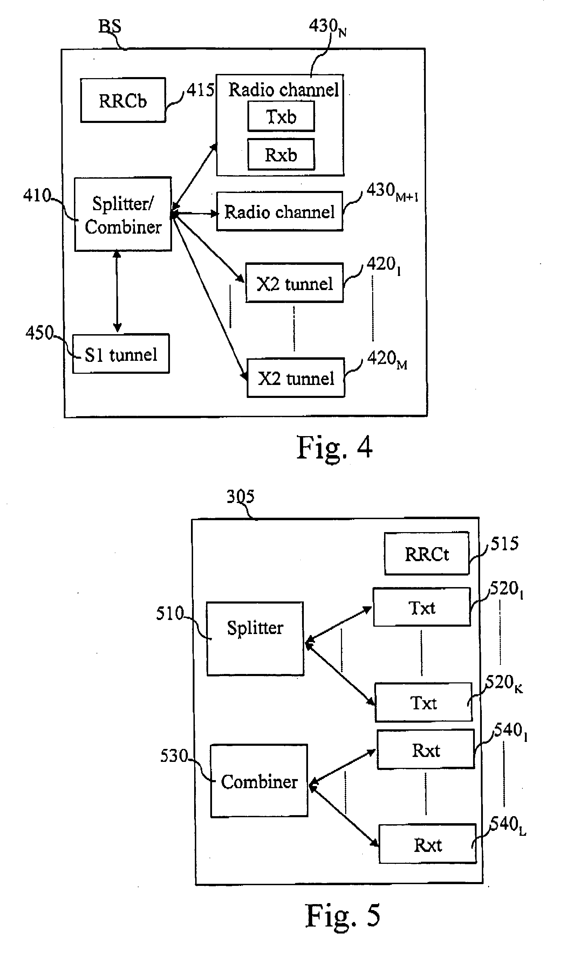

The wireless interface 305 will be disclosed in more details in reference to the Fig. 5.

The wireless interface 305 may comprise means for a simultaneous reception of at least two signals transferred by different base stations using as example MIMO or using beamforming techniques or using plural reception modules working as example in different frequency bands.

**Fig. 4** is a diagram representing modules comprised in the base station of the wireless cellular telecommunication network in which the present invention is implemented.

The base station BS comprises a splitter/combiner 410 which splits the flow of data to be transferred to the mobile terminal TE into N plural splits. A split comprises data which are different from the one comprised in another split and corresponds to different portions of the data flow. More precisely, the flow of data is decomposed into packets of data, each split is decomposed into different packets of data, each packet of data is marked by the splitter 410 with an information representative of the order of the packet of data in the flow of data.

The information representative of the order of the packet of data in the flow of data is as example a timestamp or a sequence number.

In a variant of realization, the processor 200 of the base station BS executes the tasks of splitting the flow of data and/or combining the splits in place of the splitter/combiner 410.

The network interface 206 comprises M X2 tunnels modules 420₁ to 420_{M} for establishing M X2 tunnels which enable the transfer and/or the reception of data with other base stations BS and a S1 tunnel module 450 for establishing a S1 tunnel which can exchange data between the base station BS and the Access Gateway AGW.

Through each X2 tunnel module 420, one split is transferred and/or received.

Complementary to what is shown in the Fig. 4, the N-M splits which are not transferred and/or received through one X2 tunnel module 420, are each transferred and/or received directly by the base station BS through one radio module 430 of its wireless interface 205 which comprises N-M radio modules 430_{M+1} to 430_{N}.

Each radio module 430 comprises a transmitter Txb and a receiver Rxb.

As example, each radio module contains a Radio Link Control stack and a Medium Access Control stack, responsible for segmenting and scheduling downlink data packets on the transmitter Txb and scheduling transmission grants of uplink data packets to be received by the receiver Rxb, using varying transfer formats Modulation and Coding Scheme (MCS) so as to fit with instantaneous quality of the physical link PHY established with the mobile terminal TE and so as to share the capacity of the wireless channel with other mobile terminals TE having established a radio channel with the base station BS.

The network interface 206 comprises a Radio Resource Control RRCb protocol module, which is used to configure the transmission scheme by indicating to the Radio Resource Control RRCt protocol module of the mobile terminal TE how data are split.

In a variant of realization, the processor 200 of the base station BS executes the tasks of the Radio Resource Control RRCb protocol module.

When a split of data is received through one reception module Rxb from a mobile terminal TE not handled by the base station BS, the split of data is forwarded to the base station BS which handles the mobile terminal TE through the X2 tunnel 420 established between the base station BS and the base station BS which handles the mobile terminal TE.

According to the invention, each via base station BS regularly sends quality indicator information to the splitter/combiner 410 through the X2 tunnel. The splitter/combiner 410 uses the quality indicator information transferred by each via base station BS to determine, on a per packet basis, through which X2 tunnel each packet of the data flow to be transmitted to the mobile terminal TE should individually be routed, enabling the realisation of different splits with different throughputs.

The quality indicator information are as example, the achievable throughput of the split of data being delivered by the via base station BS to the mobile terminal TE. It might be derived from the analysis of the capacity or the quality of the radio channel established between the via base station BS and the mobile terminal TE, e.g. derived from Channel Quality Indicators (CQI) reported by the mobile terminal TE to the via base station BS, and/or from the status of FIFO (full, expanding, steady, shrinking, empty) of the via base station BS containing the packets of data of the split received from the base station BS and not yet delivered to the mobile terminal TE, and/or from the load of the cell used by the radio channel established between the via base station BS and the mobile terminal.

Channel Quality Indicators are as example as the ones forwarded in 3GPP/LTE (Third Generation Project/ Long Term Evolution) system by a mobile terminal TE to the base station BS. The CQI gives the level of SINR of the pilot signals transmitted by the base station BS and observed by the mobile terminal TE for a given time/frequency position (radio chunk). CQI information is typically provided for all radio chunks supported by the radio channel established between the transmitter and the receiver.

As example, the load of a cell depends on the throughput being delivered on that cell to other mobile terminals TE via other radio channels of the via base station BS.

According to the first mode of realisation of the invention, the splitter Spl disclosed in Fig. 1 is the splitter 410, and the resource Res1 to Res5 disclosed in Fig. 1 are X2 tunnels 420₁ to 420_{M} and radio channels 430_{M+1} to 430_{N}.

**Fig. 5** is a diagram representing modules comprised in the wireless interface of a mobile terminal of the wireless cellular telecommunication network in which the present invention is implemented.

The wireless interface 305 splits the flow of data to be transferred to the base station BS which handles the mobile terminal TE into K independent splits using a splitter 510. A split comprises data which are different from the one comprised in another split and corresponds to different portions of the data flow.

Each split is directed towards a respective transmission module Txt noted 520₁ to 520_{K}. A transmission module Txt basically contains one or more FIFO (First In First Out) buffers. FIFO has typically limited size and contains data to be transmitted by transmitter Txt. FIFO length is reduced at regular transmission intervals, by the amount of data that is transmitted by the transmission module Txt during that transmission interval. Reciprocally, FIFO length is increased each time the transmitter Tx receives data from the splitter.

Each transmitter Txt also contains a Radio Link Control RLC not shown in the Fig. 5, so as to solve any transmission error by means of repetition using an acknowledgment (ARQ), and a Medium Access Control MAC function, so as to minimise any transmission errors due to interference from other transmitters, by means of schedulers, and also means to optimise the transfer format using dynamic Modulation Coding Scheme according to instantaneous link quality of the physical link PHY.

According to the invention, each transmitter Txt regularly sends quality indicator information to the splitter 510. The splitter 510 uses the quality indicator information coming from all the transmitters Txt in order to determine, on a per packet basis, to which transmitter Txt each packet of the flow of data to be transferred to the serving base station BS should individually be routed, enabling the realisation of different splits with different throughputs.

As example, and in a non limitative way, the quality indicator information consists in the FIFO status (full, expanding, steady, shrinking, empty), in the estimated radio link quality of the physical link PHY, the achievable data rate over the physical link PHY between transmitter Txt and corresponding receiver Rxb of the base station BS which handles the mobile terminal TE or which is a via base station BS or is a load indication of the physical link PHY.

As example, the load indication of the physical link PHY is the throughput being granted by the base station BS with which the physical link PHY is established.

The wireless interface 305 comprises a combiner 530 which combines the L splits transferred by the base station BS which handles the mobile terminal TE directly or via other base stations BS.

Each receiver Rxt 540₁ to 540_{L} receives a split from a given transmitter Txb of a base station BS and might exchange with that transmitter Txb some RLC/MAC/PHY control signalling to contribute to the quality of reception of the physical link PHY, e.g. for the purpose of efficient power control, scheduling, MCS or ARQ. Each receiver Rxt sends the received data to a combiner 530. The combiner 530 collects the data transmitted from the data sources Txb and which are received through various receivers Rxt and generates one single data flow to the destination application.

The wireless interface 305 comprises a Radio Resource Control RRCt protocol module, which is used to configure the transmission scheme according to the invention according to the Radio Resource Control RRCb protocol module of the base station BS which handles the mobile terminal TE.

In a preferred implementation, N equals L, and the via base stations BS to which the splits of data to be transmitted and forwarded to the base station BS which handles the mobile terminal TE are transmitted are the same as the via base stations BS from which splits of data forwarded to the mobile terminal TE are received.

In a variant of realization, the processor 300 of the mobile terminal TE executes the tasks of splitting the flow of data and/or combining the splits in place of the splitter 510 and/or the combiner 530.

In a variant of realization, the processor 300 of the mobile terminal TE executes the tasks of the Radio Resource Control RRCt protocol module.

According to the second mode of realisation of the invention, the splitter Spl disclosed in Fig. 1 is the splitter 510, and the resources Res1 to Res5 disclosed in Fig. 1 are transmitters Txt 520₁ to 520_{L}.

**Fig. 6** is a first example of an algorithm executed according to the present invention.

The present algorithm is executed by the splitter Spl.

At step S600, the splitter Spl gets, for each resource Res1 to Res5, the capacity to process elements of the group of elements within a time duration.

At next step S601, the splitter Spl sets, for each resource, a variable noted revised capacity to the capacity value obtained for the resource at step S600.

At next step S602, the splitter Sp1 ranks the resources according to their respective capacities from the highest to the lowest one.

At next step S603, the splitter Sp1 checks if an element of the group of elements needs to be allocated.

As far as no element needs to be allocated, the splitter executes the step s603.

If an element needs to be allocated, the splitter Sp1 moves to step S604.

At step S604, the splitter Spl selects the resource Res which has the highest revised capacity.

At next step S605, the splitter Spl allocates the element to the selected resource.

At next step S606, the splitter Spl determines the revised capacity of each resource Res. It has to be noted here that, as the revised capacity has been set to the capacities values at step S601, only the revised capacity value of the selected resource Res needs to be modified. The splitter Sp1 determines the revised capacity value of the selected resource Res by decreasing the revised capacity value of the selected resource Res by the value required for the process, by the selected resource Res of the allocated element.

At next step S607, the splitter Spl checks if the time duration for which the capacities have been obtained is expired.

If the time duration for which the capacities have been obtained is expired, the splitter Spl returns to step S600. Otherwise, the splitter Spl moves to step S608.

At step S608, the splitter Spl checks if each revised capacity is below a given value.

If each revised capacity is below the given value, the splitter Spl returns to step S600. Otherwise, the splitter Spl returns to step S603.

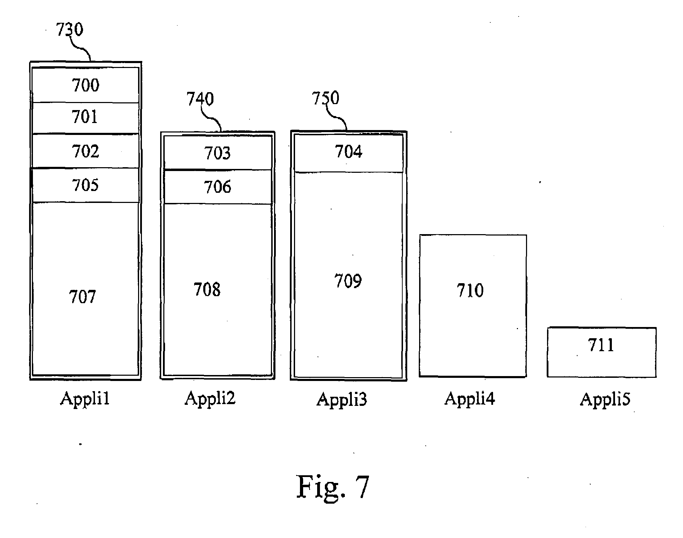

**Fig. 7** represents an example of capacities to process elements of the group of elements and revised capacities.

The Fig. 7 shows the capacity 730 to process elements of the group of elements within the time duration for the resource Res1, the capacity 740 to process elements of the group of elements within the time duration for the resource Res2, the capacity 750 to process elements of the group of elements within the time duration for the resource Res3, the capacity 710 to process elements of the group of elements within the time duration for the resource Res4 and the capacity 711 to process elements of the group of elements within the time duration for the resource Res5.

These capacities are the ones obtained by the splitter Spl at step S600 of the algorithm of the Fig. 6.

These capacities are set as revised capacities by the splitter Sp1 at step S601.

The resources Res1 to Res5 are ranked in the Fig. 6 according to their respective capacities from the highest to the lowest one. The resource Res1 is the first, the resource Res2 is the second, the resource Res3 is the third, the resource Res4 is the fourth and the resource Res5 is the last.

When an element needs to be processed by a resource Res, the splitter Spl selects at step S604 the resource Res1 which has the highest revised capacity and allocates the element to the resource Res1.

The splitter Spl determines the revised capacity of the resource Res1 by decreasing the revised capacity value 730 of the resource Res1 by the value 700 required for the process, by the resource Res1, of the allocated element.

The revised capacity of the resource Res1 is then equal to the sum of the capacities 701, 702, 705 and 707.

Once the element is allocated, the splitter Spl checks if the time duration is expired. As the time duration is not expired, the splitter Spl checks if each revised capacity is below the given value. As at least one capacity is upper than the given value, the splitter returns to step S603.

When next element of the group of data needs to be processed by a resource, the splitter Spl selects at step S604 the resource Res1 which has the highest revised capacity and allocates the element to the resource Res1.

The splitter Spl determines the revised capacity of the resource Res1 by decreasing the revised capacity value of the resource Res1 by the value 701 required for the process, by the resource Res1, of the allocated element.

The revised capacity of the resource Res1 is then equal to the sum of the capacities 702, 705 and 707.

Once the element is allocated, the splitter Spl checks if the time duration is expired. As the time duration is not expired, the splitter Spl checks if each revised capacity is below the given value. As at least one capacity is upper than the given value, the splitter returns to step S603.

When next clement of the group of data needs to be processed by a resource, the splitter Spl selects at step S604 the resource Res1 which has the highest revised capacity and allocates the element to the resource Res1.

The splitter Spl determines the revised capacity of the resource Res1 by decreasing the revised capacity value of the resource Res1 by the value 702 required for the process, by the resource Res1, of the allocated element.

The revised capacity of the resource Res1 is then equal to the sum of the capacities 705 and 707.

Once the element is allocated, the splitter Spl checks if the time duration is expired. As the time duration is not expired, the splitter Spl checks if each revised capacity is below the given value. As at least one capacity is upper than the given value, the splitter returns to step S603.

When next element of the group of data needs to be processed by a resource, the splitter Spl selects at step S604 the resource Res2 which has the highest revised capacity 740 and allocates the element to the resource Res2.

The splitter Sp1 determines the revised capacity of the resource Res2 by decreasing the revised capacity value of the resource Res2 by the value 703 required for the process, by the resource Res2, of the allocated element.

The revised capacity of the resource Res2 is then equal to the sum of the capacities 706 and 708.

Once the element is allocated, the splitter Sp1 checks if the time duration is expired. As the time duration is not expired, the splitter Spl checks if each revised capacity is below the given value. As at least one capacity is upper than the given value, the splitter returns to step S603.

When next element of the group of data needs to be processed by a resource, the splitter Sp1 selects at step S604 the resource Res3 which has the highest revised capacity 750 and allocates the element to the resource Res3.

The splitter Spl determines the revised capacity of the resource Res3 by decreasing the revised capacity value of the resource Res3 by the value 704 required for the process, by the resource Res3, of the allocated element.

The revised capacity of the resource Res3 is then equal to the capacity 709.

Once the element is allocated, the splitter Sp1 checks if the time duration is expired. As the time duration is not expired, the splitter Spl checks if each revised capacity is below the given value. As at least one capacity is upper than the given value, the splitter returns to step S603.

When next element of the group of data needs to be processed by a resource, the splitter Spl selects at step S604 the resource Res1 which has the highest revised capacity and allocates the element to the resource Res1.

The splitter Spl determines the revised capacity of the resource Res1 by decreasing the revised capacity value of the resource Res1 by the value 705 required for the process, by the resource Res1, of the allocated element.

The revised capacity of the resource Res1 is then equal to the capacity 707.

Once the element is allocated, the splitter Spl checks if the time duration is expired. As the time duration is not expired, the splitter Spl checks if each revised capacity is below the given value. As at least one capacity is upper than the given value, the splitter returns to step S603.

When next element of the group of data needs to be processed by a resource, the splitter Spl selects at step S604 the resource Res2 which has the highest revised capacity and allocates the element to the resource Res2.

The splitter Sp1 determines the revised capacity of the resource Res2 by decreasing the revised capacity value of the resource Res2 by the value 706 required for the process, by the resource Res2, of the allocated element.

The revised capacity of the resource Res2 is then equal to the capacity 708.

Once the element is allocated, the splitter Spl checks if the time duration is expired. As the time duration is expired, the splitter Spl returns to step S600.

Naturally, many modifications can be made to the embodiments of the invention described above without departing from the scope of the present invention.

## Claims

1. Method for determining to which resource among plural resources, elements of a group of elements have to be allocated, each resource having a capacity to process elements of the group of elements within a time duration, **characterized in that** the method comprises the steps of:
- allocating an element of the group of elements to the resource which has the highest capacity to process elements of the group of elements within the time duration,
- determining a revised capacity for each resource according to the capacity of the resource and elements allocated to the resource,
- allocating next element of the group of elements to the resource which has the highest revised capacity to process elements of the group of elements.

2. Method according to claim 1, **characterized in that** the steps of determining the revised capacity for each resource and of allocating next element of the group of elements to the resource which has the highest revised capacity to process elements of the group of elements are iteratively executed as far as the time duration is not expired or are executed as far as each revised capacity is below a given value.

3. Method according to claim 2, **characterized in that** the group of elements is a flow of data and the elements are packets of data.

4. Method according to claim 3, **characterized in that** the method is executed by a first telecommunication device and the flow of data being delivered to a second telecommunication device directly or via at least one third telecommunication device.

5. Method according to claim 4, **characterized in that** the first and the at least one third telecommunication device are first and second base stations and the second telecommunication device is a mobile terminal.

6. Method according to claim 5, **characterized in that** the resources are radio channels established between the first base station and the mobile terminal or network channels established between the first base station and the second base stations.

7. Method according to claim 6, **characterized in that** the capacity of each radio channel established between the first base station and the mobile terminal is representative of the maximum throughput of data that can be transferred by the first base station via the radio channel to the mobile terminal.

8. Method according to claim 6 or 7, **characterized in that,** for each second base station, a radio channel is established between the second base station and the mobile terminal, and **in that** the capacity of each network channel established between the first base station and each second base station is representative of the maximum throughput of data that can be transferred to the mobile terminal by the second base station via the radio channel established between the second base station and the mobile terminal.

9. Method according to claim 6, **characterized in that** the capacity of each network channel established between the first base station and each second base station is representative of the maximum throughput of data that can be transferred to each second base station by the first base station via the network channel established between the first base station and each second base station.

10. Method according to claim 4, **characterized in that** the first telecommunication device is a mobile terminal and **in that** the second and the at least one third telecommunication device are first and second base stations.

11. Method according to claim 10, **characterized in that** the resources are radio channels established between the mobile terminal and the first base station or radio channels established between the mobile terminal and the second base stations.

12. Method according to claim 11, **characterized in that** the capacity of each radio channel established between the mobile terminal and a base station is representative of the maximum throughput of data that can be transferred by the mobile terminal to the first base station via the radio channel established between the mobile terminal the second base station.

13. Device for determining to which resource among plural resources, elements of a group of elements have to be allocated, each resource having a capacity to process elements of the group of elements within a time duration, **characterized in that** the device comprises:
- means for allocating an element of the group of elements to the resource which has the highest capacity to process elements of the group of elements within the time duration,
- means for determining a revised capacity for each resource according to the capacity of the resource and elements allocated to the resource,
- means for allocating next element of the group of elements to the resource which has the highest revised capacity to process elements of the group of elements.

14. Computer program which can be directly loadable into a programmable device, comprising instructions or portions of code for implementing the steps of the method according to claims 1 to 12, when said computer program is executed on a programmable device.
